# EUROPEAN PATENT APPLICATION

(11) **EP 2 497 594 A1**
(43) Date of publication of application: **12.09.2012**
(21) Application number: 11189331.9
(22) Date of filing: 16.11.2011
(51) Int. Cl.: B23H 1/10, B01D 29/09, B01D 33/44

(54) **Working fluid filtration device of electric discharge machine**

(30) Priority: 08.03.2011 JP 2011050337
(71) Applicant: FANUC CORPORATION, Oshino-mura Minamitsuru-gun Yamanashi 401-0597 (JP)
(72) Inventor: Kasai, Hirotsugu, Minamitsuru-gun, Yamanashi 401-0597 (JP); Makino, Yoshinori, Minamitsuru-gun, Yamanashi 401-0597 (JP)
(74) Representative: Ward, James Norman

(57) **Abstract**

An electric discharge unit of an electric discharge machine is disposed in a working tank, and a working fluid in the working tank is delivered to a filter tank by a pump. A filter for working fluid filtration wound off from a roll faces apertures in the bottom of the filter tank. When the internal pressure of the filter tank exceeds a predetermined value, the filter is moved a predetermined distance downward of the filter tank. In a position off the filter tank, that part of the filter which has been used for filtration is cleaned.

## Description

### BACKGROUND OF THE INVENTION

### Field of the Invention

The present invention relates to a working fluid filtration device of an electric discharge machine, in which fine sludge of a workpiece discharged during machining is filtered by a rolled filter media, and the filter media is backwashed so that it can be repeatedly used a plurality of times.

### Description of the Related Art

In a widely used filter for filtering a working fluid in machining operation using a wire-cut electric discharge machine, a filter media, such as cellulose or synthetic fiber fabric, is folded and packed into a cylindrical metal or resin vessel. In this specification, the filter is assumed to be a combination of a filter media and a filter vessel that accommodates the media.

In the filter of this type, sludge discharged during machining accumulates as the working fluid is filtered and clogs the filter, thereby reducing its capacity of filtration, in a certain period of time. The capacity of filtration is also called the filtration flow rate.

The capacity of filtration (filtration flow rate) of the clogged filter can be increased by increasing the pressure (filtration pressure) during the filtration of the working fluid. However, the filter media and filter vessel are limited in strength, so that the filtration pressure can be increased only to a value less than the strength limit. In general, a filter is replaced when the filtration pressure has reached the strength limit.

As described in Japanese Patent Application Laid-Open No. 9-029584, a filter used in an existing wire-cut electric discharge machine is a combination of a filter media and a filter container. In replacing the filter, however, both the filter media and the filter container must be replaced with new ones, so that they greatly affect the environment, resulting in an increase in cost. Therefore, there have recently been increasing demands for extended-life filters and reduction of waste. In addition to the above problem, this technique does not use any means for notifying a control unit of the exhaustion of the filter that can be delivered from a filter supply roll. Accordingly, the unfiltered working fluid inevitably flows into a clean-water tank, so that water piping and cooling devices are contaminated and clogged with sludge. Thus, the piping system of the machine may break down.

Japanese Patent Application Laid-Open No. 2-30433 discloses a wire-cut electric discharge apparatus in which a rolled filter media is used to filter a working fluid such that a collection roller is driven to collect the filter when the internal pressure of a filter tank is increased. Since this wire-cut electric discharge apparatus uses no filter vessel, it is unnecessary to discard a filter vessel when the filter is replaced. Since this electric discharge apparatus does not have a device for cleaning the filter, however, the collected filter cannot be used repeatedly. A drive motor for moving the filter is provided only on the collection-roller side, so that the filter may be broken when it is wet with the working fluid.

Japanese Patent Application Laid-Open No. 2006-35089 discloses a technology of a circulation cooling water filtration device for molds using a rolled filter media. In this device, the filter is backwashed by means of compressed air or water jets so that the same filter can be used many times. Since this filtration device has a cleaning device, the filter can be used repeatedly. However, the filter is backwashed in cooling water in another water tank, and sludge removed from the filter by the backwashing is returned to the circulation cooling water in the water tank. Thus, the circulation cooling water in the water tank must be abandoned and replaced with new cooling water every time the backwashing is performed.

Japanese Patent Application Laid-Open No. 2004-63846 discloses a technique in which a slurry produced in a polishing process for the manufacture of a semiconductor device is filtered such that a filter, which is backwashed by air blowing or ultrapure water spraying, can be repeatedly used. Since the semiconductor device has a cleaning device, the filter can be used repeatedly. For this semiconductor device, however, a part of the filter, formed endless, is used for filtering processing, and at the same time, another part is used for eliminating clogging due to the backwashing. Thus, the same filter is used repeatedly. Since the backwashing is performed without detection of filter clogging, the filter may sometimes be backwashed even when it is not clogged. Consequently, the backwashing cannot be carried out efficiently.

Japanese Utility Model Application Laid-Open No. 62-022025 discloses a sub-filter technology intended to extend the life of a filter element of an existing filtration device for an electric discharge machining fluid. In this filtration device, the filter element used in a pre-cleaner is not backwashed for repeated use.

### SUMMARY OF THE INVENTION

Accordingly, in consideration of the above problems of the prior art, the object of the present invention is to provide a working fluid filtration device of an electric discharge machine, in which fine sludge of a workpiece discharged during machining is filtered by a rolled filter media, and the filter media is backwashed so that it can be repeatedly used a plurality of times.

A working fluid filtration device of an electric discharge machine according to the present invention comprises a working tank accommodating an electric discharge unit for machining a workpiece by electric discharge using an electrode, a contaminated-water tank in which a working fluid from the working tank is collected and pooled, and a filter tank having an aperture in the bottom thereof. A filter for working fluid filtration is brought into contact with the bottom of the filter tank and a space defined by the filter tank and the filter is filled with the working fluid from the contaminated-water tank, whereby the working fluid is filtered. The working fluid filtration device further comprises a filter supply roll actuator configured to rotate a filter supply roll in the form of a rolled filter for working fluid filtration, a filter collection roll actuator configured to rotate a filter collection roll on which the filter is collected, a movement detection unit configured to detect the amount of movement of the filter, a pressure detection unit configured to detect a pressure of the working fluid in the filter tank, a nozzle located upstream or downstream of the filter tank and configured to clean the filter, and a control unit configured to drive the filter supply roll actuator or the filter collection roll actuator to move the filter by a predetermined distance and then clean that part of the filter which has moved by the predetermined distance when the pressure of the working fluid detected by the pressure detection unit exceeds a predetermined value.

The control unit may be configured to move that part of the filter which has been used for filtration in the filter tank when the pressure of the working fluid detected by the pressure detection unit exceeds the predetermined value, cleans the moved part at a position where it has moved, and then move the cleaned part of the filter to the filter tank.

The working fluid filtration device may further comprise a counter unit configured to count the number of cleaning cycles of one and the same part of the filter, and the control unit collects the filter on the filter collection roll without performing cleaning when the number of cleaning cycles reaches a predetermined value.

The control unit may be configured to move that part of the filter which has been used for filtration in the filter tank when the pressure of the working fluid detected by the pressure detection unit exceeds the predetermined value and cleans the moved part of the filter, and the control unit may rotate the filter collection roll and the filter supply roll in reverse directions when the entire filter is collected on the filter collection roll.

The filter may be moved the predetermined distance by synchronously driving the filter supply roll actuator and the filter collection roll actuator.

According to the present invention, there may be provided a working fluid filtration device of an electric discharge machine, capable of efficiently using a filter such that the filter is cleaned at an appropriate point in time without replacing a working fluid in a water tank after the filter cleaning is finished, in which fine sludge of a workpiece discharged during machining is filtered by a rolled filter media, and the filter media is backwashed so that it can be repeatedly used a plurality of times.

### BRIEF DESCRIPTION OF THE DRAWINGS

The above and other objects and features of the present invention will be obvious from the ensuing description of embodiments with reference to the accompanying drawings, in which:
FIG. 1 is a diagram illustrating one embodiment of a working fluid filtration device of an electric discharge machine according to the present invention, in which the internal pressure of a filter tank is detected by a pressure sensor;
FIG. 2A is a flowchart illustrating a first mode of operation of the working fluid filtration device of the electric discharge machine shown in FIG. 1;
FIG. 2B is a continuation of the flowchart of FIG. 2A;
FIG. 3A is a flowchart illustrating a second mode of operation of the working fluid filtration device of the electric discharge machine shown in FIG. 1;
FIG. 3B is a continuation of the flowchart of FIG. 3A; and
FIG. 4 is a diagram illustrating another embodiment of the working fluid filtration device of the electric discharge machine according to the present invention, in which the attainment of a predetermined value by the internal pressure of a filter tank is detected by a pressure switch.

### DETAILED DESCRIPTION OF THE PREFERRED EMBODIMENTS

In the present invention, a filter media is backwashed after it is moved to a position separate from a filter tank (or backwashed in another tank). The amount of movement of the filter media is measured by using an encoder attached to a roller that is in close contact with the filter media. Since sludge that is removed as the filter media is backwashed is not returned to a working fluid reservoir tank of an electric discharge machine, the working fluid need not be abandoned and replaced with a new one for each backwash cycle. If a pressure is increased to a degree where replacement of the filter media is required, cleaning is performed based on a signal from a pressure sensor or a replacement signal from a pressure switch. Thus, the backwash can be performed efficiently. A predetermined number of backwash cycles (corresponding to the frequency of experimental determination of service life expiration) are repeated. The service life of the filter media is judged to have expired (i.e., the replacement time for the filter media is judged to have been reached) when the predetermined number is reached.

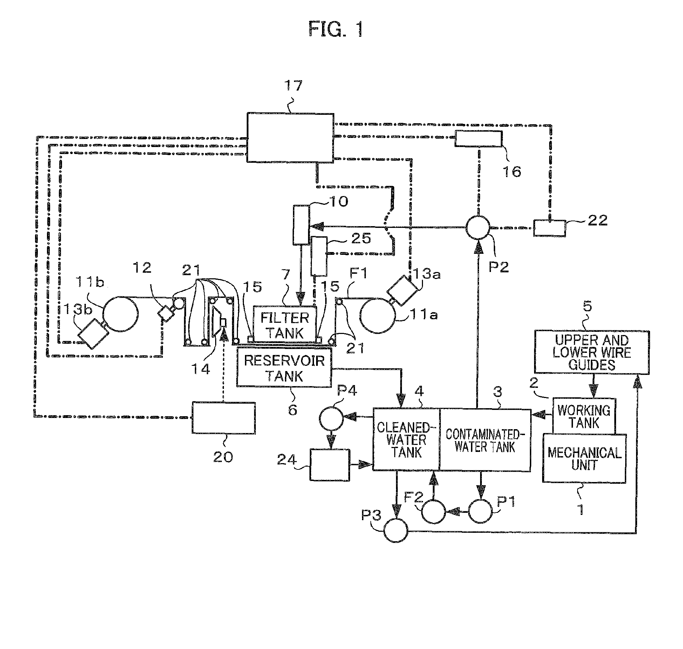

FIG. 1 is a diagram illustrating one embodiment of a working fluid filtration device of an electric discharge machine according to the present invention.

In the electric discharge machine, e.g., a wire-cut electric discharge machine, a wire electrode delivered from a wire bobbin first travels through an upper wire guide and passes through a workpiece machining area to machine a workpiece set in a working tank 2 disposed on a mechanical unit 1. Thereafter, the wire electrode travels through a lower wire guide and is taken up on a wire take-up unit. The wire electrode is subjected to a predetermined tension as it travels in the workpiece machining area. In FIG. 1, reference numeral 5 collectively denotes the upper and lower wire guides.

The working tank 2 is filled with the working fluid. As a voltage is applied between the wire electrode and the workpiece in the working tank, electric discharge occurs between them, thereby machining of the workpiece is carried out. The wire-cut electric discharge machine is controlled by a controller (not shown).

The contaminated working fluid used in the working tank 2 collects in a contaminated-water tank 3. The working fluid contaminated with sludge or the like in the contaminated water tank 3 is drawn up by a filter pump P1 and introduced into a container that accommodates a second filter F2. The working fluid filtered by the second filter F2 is delivered to a clean-water tank 4. The filtered working fluid collected in the clean-water tank 4 is delivered to the upper and lower wire guides 5 of the wire electric discharge machine by a working fluid circulation pump P3. In order to keep the temperature of the working fluid in the clean-water tank 4 constant, moreover, the working fluid from the clean-water tank 4 is drawn up by a circulation pump P4 and introduced into a cooler 24. The working fluid cooled by the cooler 24 is returned to the clean-water tank 4.

Reference symbol F1 designates a first filter in the form of a paper roll. Reference numerals 11a, 21 and 11b denote a filter supply roll, a plurality of sets of guide rollers, and a filter collection roll. The guide rollers 21 are arranged on a movement path and serve to guide the first filter F1. The filter collection roll 11b serves to collect the first filter F1 delivered from the filter supply roll 11a. One and the other end portions of the rolled first filter F1 are removably mounted individually on core members of the rolls 11a and 11b, respectively. The filter supply roll 11a is connected to a motor 13a for filter supply roll, and the filter collection roll 11b is connected to a motor 13b for filter collection roll. Reference numeral 12 denotes an encoder for measuring the amount of movement of the first filter F1.

Reference numerals 6 and 7 denote a reservoir tank and a filter tank, and reference numeral 15 denotes a passage seal 15 for the first filter F1 on the bottom side surface of the filter tank 7. The filter tank 7 comprises a top lid and a bottom board (not shown), and the bottom board is provided with a large number of apertures and supports the first filter F1. The filter tank 7 and the first filter F1 define a closed space.

The contaminated working fluid pooled in the contaminated-water tank 3 is drawn up by operating a pump P2 for rolled filter and delivered to the filter tank 7 through a constant-flow valve 10. As the first filter F1 at the bottom of the filter tank 7 is contaminated and clogged, the internal pressure of the filter tank 7 increases. The working fluid in the filter tank 7 is filtered by the first filter F1 and caused to flow from the filter tank 7 into the reservoir tank 6 by its own gravity and the increase of the internal pressure of the filter tank 7. The sludge which has been contained in the working fluid and has not yet been filtered by the first filter F1 adheres to the first filter F1. The filtered working fluid pooled in the reservoir tank 6 is introduced into the clean-water tank 4. The working fluid is delivered from the reservoir tank 6 to the clean-water tank 4 by a pump (not shown) or a natural gravitational flow.

Reference numeral 22 denotes an inverter that drives the pump P2 for rolled filter. The pump P2 is stopped by means of an electromagnetic switch 16. The electromagnetic switch 16 is a combination of an electromagnetic contactor for the switching control of an electrical circuit and a thermal relay (thermomotive overload relay) for protecting motors from overload.

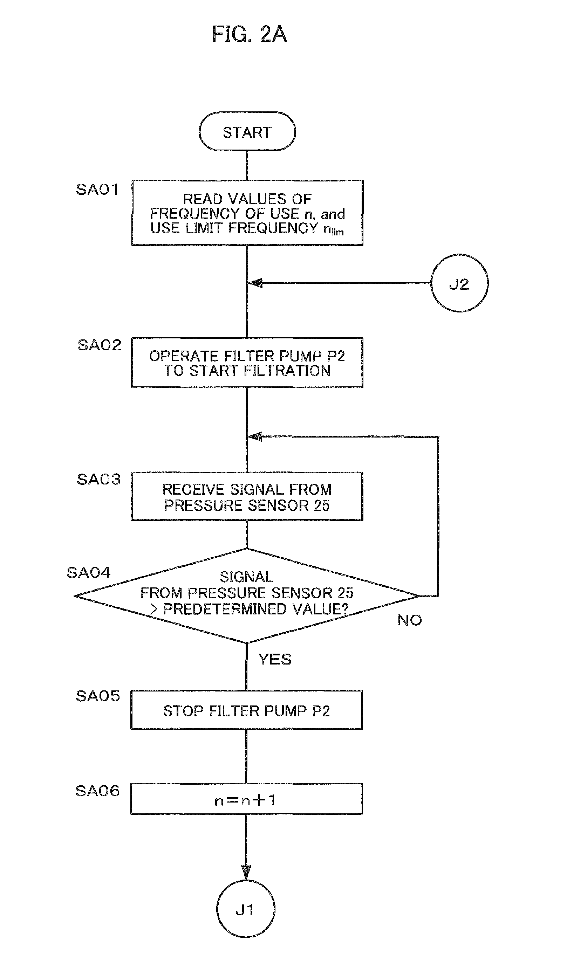

A control unit 17 is a device for controlling the entire working fluid filtration device and comprises a processor (CPU), memory, input/output interface, and display device for displaying the replacement of the first filter F1, none of which are shown. The memory comprises a region for storing a frequency of use n of the first filter F1, a region for storing an operation direction flag Dir, and a region for storing a use limit frequency nₗᵢₘ of the first filter F1. The frequency of use n, direction flag Dir, and use limit frequency nₗᵢₘ will be described later with reference to the flowcharts of FIGS. 2A to 3B. The control unit 17 may be constructed as a dedicated controller for the working fluid filtration device, or its function may be incorporated into the controller attached to the electric discharge machine.

A backwash nozzle 14 for backwashing the first filter F1 is disposed in a predetermined position ranging from the reservoir tank 6 and the filter tank 7 to the filter collection roll 11b located downstream of the tanks. Reference numeral 20 denotes a cleaning fluid supply device, which supplies the backwash nozzle 14 with a cleaning fluid for backwashing the first filter F1. The backwashing of the first filter by means of the backwash nozzle 14 may be replaced with a cleaning method using an agent.

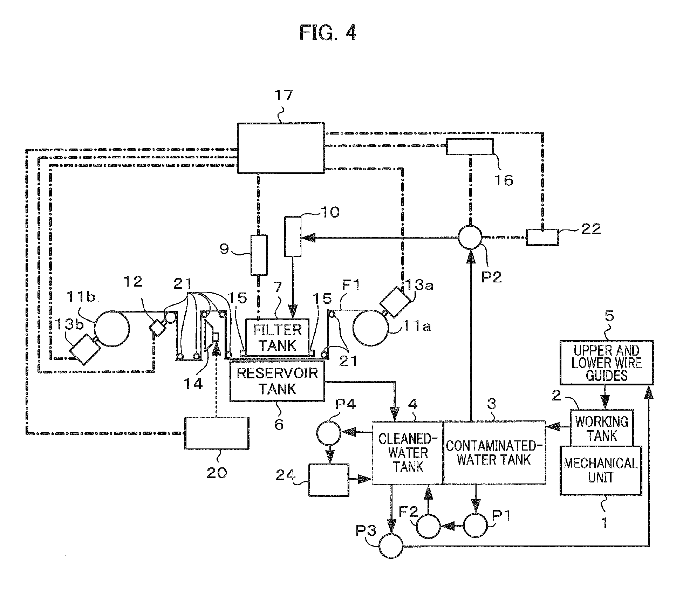

Reference numeral 25 denotes a pressure sensor 25. As the first filter F1 at the bottom of the filter tank 7 is contaminated and clogged, the internal pressure of the filter tank 7 increases. The internal pressure of the filter tank 7 is detected by the pressure sensor 25. A signal indicative of the internal pressure of the filter tank 7 detected by the pressure sensor 25 is input to the control unit 17. When the internal pressure of the filter tank 7 detected by the pressure sensor 25 reaches a predetermined value, the control unit 17 activates the motor 13b to rotate the filter collection roll 11b and move it to a place where the first filter F1 is backwashed, that is, to a place where the backwash nozzle 14 is disposed. In this place, that part of the first filter F1 which has been used to filter the working fluid at the filter tank 7 is backwashed by means of the backwash nozzle 14. The amount of movement of the first filter F1 to the location of the backwash nozzle 14 can be measured by using the encoder 12. Instead of using the pressure sensor 25 to detect the internal pressure of the filter tank 7, a pressure switch 9 (FIG. 4) may be used to detect the attainment of the predetermined value by the internal pressure of the filter tank 7 so that a signal to that effect can be transmitted to the control unit 17.

The following is a description of a method for detecting an attainment of a limit of winding-off of the first filter F1 from the filter supply roll 11a or the filter collection roll 11b. In the description to follow, the one and the other end portions of the first filter F1 are assumed to be secured to the core members of the rolls 11a and 11b, respectively.

First, the first filter F1 is wound off from the filter supply roll 11a and collected on the filter collection roll 11b. When the first filter F1 ceases to be capable of being wound off from the filter supply roll 11a any more, neither of the motor 13a for filter supply roll and the motor 13b for filter collection roll can rotate even if a drive current for rotating the motor 13b is increased. Consequently, the first filter F1 ceases to move, so that the amount of movement of the first filter F1 detected by the encoder 12 becomes zero. Thus, by monitoring the value of the drive current for the motor 13b for filter collection roll and the amount of movement of the first filter F1 detected by the encoder 12, whether or not the winding-off of the first filter F1 from the filter supply roll 11a is finished can be detected.

In the case where the first filter F1 taken up on the filter collection roll 11b is wound off and moved in the reverse direction to the filter supply roll 11a, moreover, whether or not the wound-off of the first filter F1 from the filter collection roll 11b is finished can be detected by monitoring the value of the drive current for the motor 13a for filter supply roll and the amount of movement of the first filter F1 detected by the encoder 12.

In the case where the one and the other end portions of the first filter F1 are not secured to the respective core members of the filter supply and collection rolls 11a and 11b, a light shielding sensor or the like may be used to detect the attainment of the limit of the winding-ff of the first filter F1 from the filter supply or collection roll 11a or 11b. Alternatively, the attainment of the limit may be detected by detecting a specific physical quantity of a mark or the like provided in a predetermined position on the first filter.

While the backwash nozzle 14 is located downstream of the filter tank 7 and the reservoir tank 6 in FIG. 1, it may alternatively be located upstream of these tanks 7 and 6. In moving the first filter F1, the motor 13a for filter supply roll and the motor 13b for filter collection roll are driven synchronously with each other. By synchronously driving these motors 13a and 13b, the first filter F1 can be moved without slackening. If the configuration of the filtration device or the material of the first filter obviates the problem of slackening or the like, only the motor located ahead of the first filter F1 with respect to the direction of movement may be driven with the other motor in free rotation such that the first filter is pulled as it moves.

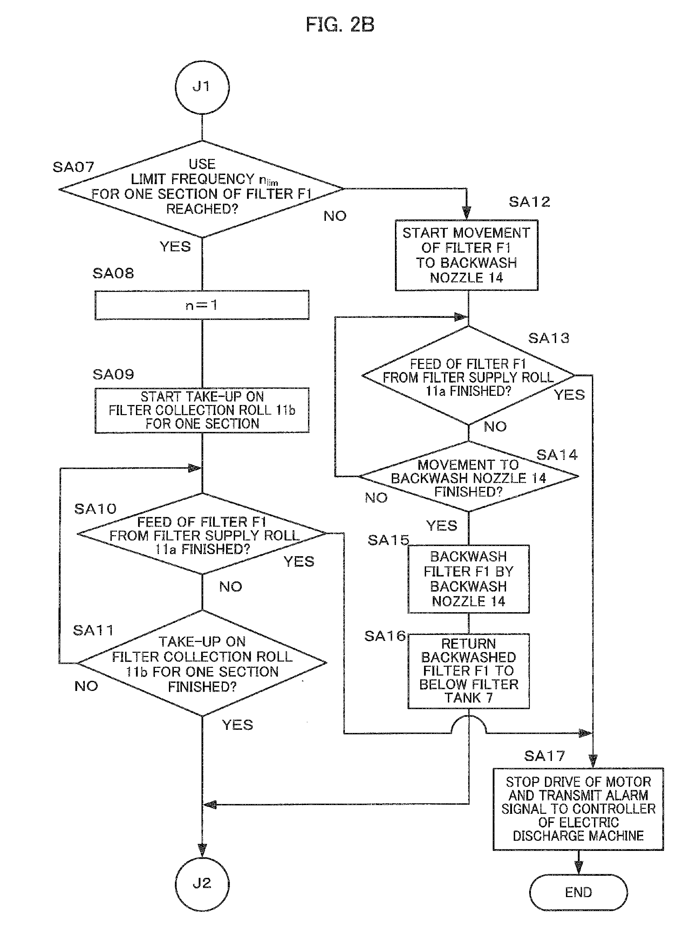

FIGS. 2A and 2B are flowcharts illustrating a first mode of operation of the working fluid filtration device of the electric discharge machine shown in FIG. 1. In this operation mode, that part of the first filter F1 which has been used for filtration is backwashed and rewound for use before the first filter reaches its end position. The following is a sequential description of various steps of operation.
[Step SA01] The value of n, indicative of the frequency of use of the filter, is read. An initial value 1 is set for the frequency of use n. The value of n is set to 1 when a brand-new filter roll is used as the filter supply roll 11a. During use, the value of the frequency of use n which has been stored in the memory when the working fluid filtration device is stopped is then used when the filtration device is started up.
[Step SA02] The filter pump P2 is operated to start filtration.
[Step SA03] A signal from the pressure sensor 25 is received.
[Step SA04] It is determined whether or not a predetermined value is exceeded by the signal from the pressure sensor 25. If the predetermined value is exceeded, the program proceeds to Step SA05. If not, the program returns to Step SA03.
[Step SA05] The filter pump P2 is stopped.
[Step SA06] The value of the frequency of use n is incremented by 1 to be updated. When the operation of the working fluid filtration device of the electric discharge machine is stopped, the value n is stored in a nonvolatile memory.
[Step SA07] It is determined whether or not the use limit frequency nₗᵢₘ for one section of the filter F1 is reached. If the use limit frequency is reached (YES), the program proceeds to Step SA08. If not (NO), the program proceeds to Step SA12.
[Step SA08] The value of the frequency of use n is restored to 1.
[Step SA09] Take-up on the filter collection roll 11b for one section is started.
[Step SA10] It is determined whether or not the feed of the filter F1 from the filter supply roll 11a is finished. If the feed is not finished (NO), the program proceeds to Step SA11. If the feed is finished (YES), the program proceeds to Step SA17.
[Step SA11] It is determined whether or not the take-up on the filter collection roll 11b for one section is finished. If the take-up is not finished (NO), the program returns to Step SA10. If the take-up is finished (YES), the program returns to Step SA02, whereupon processing is continued.
[Step SA12] The filter F1 starts to be moved to the position of the backwash nozzle 14.
[Step SA13] It is determined whether or not the feed of the filter F1 from the filter supply roll 11a is finished. If the feed is not finished (NO), the program proceeds to Step SA14. If the feed is finished (YES), the program proceeds to Step SA17.
[Step SA14] It is determined whether or not the movement of the filter F1 to the position of the backwash nozzle 14. If the movement is not finished (NO), the program proceeds to Step SA13. If the movement is finished (YES), the program proceeds to Step SA15.
[Step SA15] The filter F1 is backwashed using the backwash nozzle 14.
[Step SA16] The backwashed filter F1 is returned to below the filter tank 7, whereupon the program returns to Step SA02.
[Step SA17] The drive of the motor to move the filter F1 is stopped, and an alarm signal is transmitted to the controller of the electric discharge machine, whereupon the processing terminates.

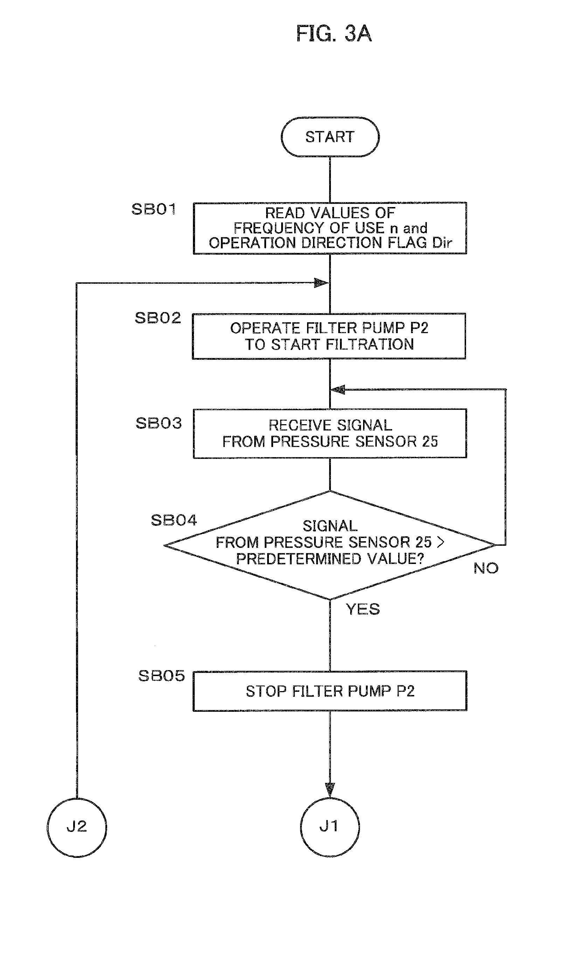

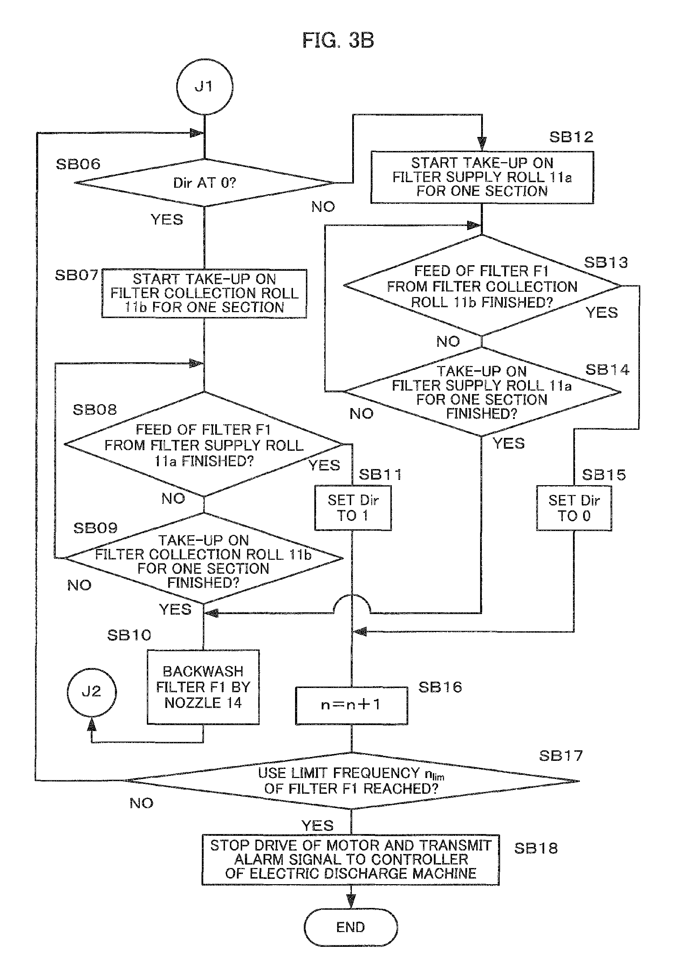

FIGS. 3A and 3B are flowcharts illustrating a second mode of operation of the working fluid filtration device of the electric discharge machine shown in FIG. 1. In this operation mode, that part of the first filter F1 which has been used for filtration is rewound for use after the end position is reached by the first filter. The following is a sequential description of various steps of operation.
[Step SB01] The value of n, indicative of the frequency of use of the filter, is read. An initial value 1 is set for the frequency of use n. The value of n is set to 1 when a brand-new filter roll is used as the filter supply roll 11a. Further, the operation direction flag Dir, indicative of the feed direction of the filter F1, is read. In this specification, the operation direction flag Dir is set so that 0 and 1 represent forward and reverse directions of rotation, respectively, and its initial value is set to 0 (forward rotation direction).
[Step SB02] The filter pump P2 is operated to start filtration.
[Step SB03] A signal from the pressure sensor 25 is received.
[Step SB04] It is determined whether or not a predetermined value is exceeded by the signal from the pressure sensor 25. If the predetermined value is exceeded, the program proceeds to Step SB05. If not, the program returns to Step SB03.
[Step SB05] The filter pump P2 is stopped.
[Step SB06] It is determined whether or not the operation direction flag Dir is 0 (forward rotation direction). If the flag Dir is 0, the program proceeds to Step SB07. If not (i.e., the operation direction flag Dir is 1 (reverse rotation direction)), the program proceeds to Step SB12.
[Step SB07] Take-up on the filter collection roll 11b for one section is started.
[Step SB08] It is determined whether or not the feed of the filter F1 from the filter supply roll 11a is finished. If the feed is not finished (NO), the program proceeds to Step SB09. If the feed is finished (YES), the program proceeds to Step SB11.
[Step SB09] It is determined whether or not the take-up on the filter collection roll 11b for one section is finished. If the take-up is not finished (NO), the program returns to Step SB08. If the take-up is finished (YES), the program proceeds to Step SB10.
[Step SB10] The filter F1 is backwashed using the backwash nozzle 14.
[Step SB11] The operation direction flag Dir is set to 1 (reverse rotation direction), whereupon the program proceeds to Step SB16.
[Step SB12] Take-up on the filter supply roll 11a for one section is started.
[Step SB13] It is determined whether or not the feed of the filter F1 from the filter collection roll 11b is finished. If the feed is not finished (NO), the program proceeds to Step SB14. If the feed is finished (YES), the program proceeds to Step SB15.
[Step SB14] It is determined whether or not the take-up on the filter supply roll 11a for one section is finished. If the take-up is finished (YES), the program returns to Step SB10. If not (NO), the program returns to Step SB13.
[Step SB15] The operation direction flag Dir is set to 0 (forward rotation direction), whereupon the program proceeds to Step SB16.
[Step SB16] The value of the frequency of use n is incremented by 1 to be updated.
[Step SB17] It is determined whether or not the use limit frequency nₗᵢₘ of the filter F1 is reached. If the limit frequency is not reached (NO), the program returns to Step SB06. If the limit frequency is reached (YES), the program proceeds to Step SB18.
[Step SB18] The drive of the motor to move the filter F1 is stopped, and an alarm signal is transmitted to the controller of the electric discharge machine, whereupon the processing terminates.

According to the present invention, one and the same part of a filter can be used a plurality of times by backwashing the filter. The filter may be cleaned by some other method than backwashing. Further, the machine can be stopped by transmitting an alarm signal to the controller when the filter supply roll is used up. Thus, water piping and cooling devices can be prevented from being clogged with sludge.

## Claims

1. A working fluid filtration device of an electric discharge machine, which comprises a working tank accommodating an electric discharge unit for machining a workpiece by electric discharge using an electrode, a contaminated-water tank in which a working fluid from the working tank is collected and pooled,
and a filter tank having an aperture in the bottom thereof, and is configured so that a filter for working fluid filtration is brought into contact with the bottom of the filter tank and a space defined by the filter tank and the filter is filled with the working fluid from the contaminated-water tank, whereby the working fluid is filtered, the working fluid filtration device comprising:
a filter supply roll actuator configured to rotate a filter supply roll in the form of a rolled filter for working fluid filtration;
a filter collection roll actuator configured to rotate a filter collection roll on which the filter is collected;
a movement detection unit configured to detect the amount of movement of the filter;
a pressure detection unit configured to detect a pressure of the working fluid in the filter tank;
a nozzle located upstream or downstream of the filter tank and configured to clean the filter; and
a control unit configured to drive the filter supply roll actuator or the filter collection roll actuator to move the filter by a predetermined distance and then clean that part of the filter which has moved by the predetermined distance when the pressure of the working fluid detected by the pressure detection unit exceeds a predetermined value.

2. The working fluid filtration device of an electric discharge machine according to claim 1,
wherein the control unit moves that part of the filter which has been used for filtration in the filter tank when the pressure of the working fluid detected by the pressure detection unit exceeds the predetermined value, cleans the moved part at a position where it has moved, and then moves the cleaned part of the filter to the filter tank.

3. The working fluid filtration device of an electric discharge machine according to claim 2, wherein the working fluid filtration device further comprises a counter unit configured to count the number of cleaning cycles of one and the same part of the filter, and the control unit collects the filter on the filter collection roll without performing cleaning when the number of cleaning cycles reaches a predetermined value.

4. The working fluid filtration device of an electric discharge machine according to claim 1,
wherein the control unit moves that part of the filter which has been used for filtration in the filter tank when the pressure of the working fluid detected by the pressure detection unit exceeds the predetermined value and cleans the moved part of the filter, and the control unit rotates the filter collection roll and the filter supply roll in reverse directions when the entire filter is collected on the filter collection roll.

5. The working fluid filtration device of an electric discharge machine according to any one of claims 1 to 4, wherein the filter is moved the predetermined distance by synchronously driving the filter supply roll actuator and the filter collection roll actuator.
